# EUROPÄISCHE PATENTSCHRIFT

(11) **EP 2 134 914 B1**
(45) Veröffentlichungstag und Bekanntmachung des Hinweises auf die Patenterteilung: **31.07.2013**
(21) Anmeldenummer: 08716469.5
(22) Anmeldetag: 12.03.2008
(51) Int. Cl.: E05F 3/12

(54) **REGULIERVENTIL**
CONTROL VALVE
SOUPAPE DE RÉGLAGE

(30) Priorität: 16.03.2007 DE 102007013377
(43) Veröffentlichungstag der Anmeldung: 23.12.2009
(73) Patentinhaber: Dorma GmbH + Co. KG, 58256 Ennepetal (DE)
(72) Erfinder: WULBRANDT, Tim, 58332 Schwelm (DE)
(86) Internationale Anmeldenummer: PCT/EP2008/001964
(87) Internationale Veröffentlichungsnummer: WO 2008/113498

(56) Entgegenhaltungen:
- EP-A- 0 919 688
- WO-A-2006/018186
- US-A- 5 502 874

## Beschreibung

Die Erfindung betrifft ein Regulierventil, das in eine mit einem Innengewinde ausgeführte Bohrung eines hydraulischen Türschließers befestigbar ist, mit einem Grundkörper, an den sich ein Regulierbereich anschließt, und einem Gewinde mit einer Verdrehsicherung, wobei das Gewinde mit der Verdrehsicherung in das Innengewinde der Bohrung eingeschraubt wird.

In der DE 102 28 872 B4 ist ein Regulierventil für einen Türschließer offenbart, der aus einem Grundkörper und einem Regulierbereich besteht. Am Grundkörper befindet sich zur Regulierung des Regulierventils ein Gewinde, das in einer Bohrung des Türschließers eindrehbar ist. Der Regulierbereich ist hierbei hülsenartig ausgeführt und über eine Kugelgelenkverbindung mit dem Grundkörper verbunden. Um ein ungewolltes Verdrehen des Regulierventils, insbesondere des Regulierbereiches zu verhindern, ist eine am Regulierbereich angeordnete Verdrehsicherung vorgesehen, die als Ansatz oder Vorsprung ausgebildet ist. Dieser Ansatz ist in einer Nut innerhalb des Gehäuses des Türschließers längsbeweglich geführt.

EP 0 919 688 offenbart ein onderes Beispiel eines Regulierventils.

Es ist Aufgabe der vorliegenden Erfindung, ein Regulierventil der eingangs beschriebenen Art zu schaffen, das einfach gestaltet ist, wobei ein ungewolltes Verstellen des Regulierventils während des Betriebes ausgeschlossen ist.

Zur Lösung dieser Aufgabe wird ein Regulierventil mit den Merkmalen des Anspruches 1 vorgeschlagen. In den abhängigen Ansprüchen sind bevorzugte Weiterbildungen ausgeführt.

Dazu ist erfindungsgemäß vorgesehen, dass der Grundkörper (2) eine Sacklochbohrung (30) aufweist, die entlang der Längsachse des Grundkörpers (2) gegenüberliegend dem Kopfbereich (5) angeordnet ist, wobei der Ansatz (16b) formschlüssig und verdrehfest in der Sacklochbohrung (30) befestigt ist und der erhabene Bereich (7) einen umlaufenden Kragen (7a) aufweist, der mit Seitenflächen (32a - 32d) der Nut (19) korrespondiert. Dadurch kann der Regulierbereich einstückig kraft- und formschlüssig sowie fluchtend zum Grundkörper hergestellt werden, wobei der Regulierbereich stabilisiert am Grundkörper verbunden ist und sich der erhabene Bereich beim Eindrehen in den Türschließer bzw. beim Einstellen des Regulierventils innerhalb des Türschließers durch den Monteur an den Seitenflächen abstützt und wirkt dadurch einer Kerbwirkung entgegen.

Eine weitere Verbesserung wird dadurch erzielt, dass der Grundkörper eine Nut aufweist, an der der erhabene Bereich angeordnet ist. Damit kann sich der erhabene Bereich an der Nut gegen Verdrehen abstützen und wird beim Eindrehen in die Bohrung stabilisiert, so dass ein Abscheren vermieden wird.

Von besonderem Vorteil ist, dass die Nut im Bereich einer Fläche angeordnet ist. Damit wird erreicht, dass der nach dem Eindrehen verformte erhabene Bereich sich nicht um den Umfang des Schaftes oder Gewindes verteilt, was in einem ungünstigen Fall eine Verringerung der Klemmwirkung bewirken kann.

Es ist weiterhin von Vorteil, dass der Grundkörper einen Schaft aufweist, an dem der erhabene Bereich angeordnet ist und über den Durchmesser des Schaftes hinausragt. Somit kann an der Mantelfläche der Bohrung des Türschließers eine klemmende Wirkung erzielt werden.

Ein wesentlicher Vorteil ist, dass der erhabene Bereich am Gewinde angeordnet ist und über den Durchmesser des Gewindes hinausragt. Somit wird eine klemmende Wirkung in mehreren Gewindeflanken des Innengewindes des Türschließers übertragen, welches höheren Klemmkräften gleichkommt. Dadurch wird eine erhöhte Flächenpressung an den ineinander greifenden Gewindeteilen erreicht.

Es hat sich als sinnvoll erachtet, dass das Gewinde am Schaft angeordnet ist. Dadurch ist die Herstellung des Gewindes auf einfache Weise realisierbar.

Eine weitere Verbesserung ist dadurch vorgesehen, dass der Regulierbereich aus einer Schaftverlängerung mit einem Ende besteht, wobei die Schaftverlängerung über einen Ansatz mit dem erhabenen Bereich verbunden Ist. Somit kann der Regulierbereich in einem einzigen Arbeitsgang hergestellt werden.

Weiterhin vorteilhaft ist, dass die Sacklochbohrung einen eckigen oder unrunden Querschnitt aufweist. Dies führt beim Eindrehen des Regulierventils in die Bohrung des Türschließers zu einer zusätzlichen Sicherung gegen Verdrehen.

Es hat sich weiterhin als vorteilhaft erwiesen, dass der Ansatz einen Zapfen aufweist, der in eine Bohrung des Grundkörpers hineinragt. Hierdurch wird der Ansatz in einer weiteren Weise gegen Verdrehen gesichert.

Von Vorteil ist, dass der erhabene Bereich form- und/oder kraft- und/oder stoffschlüssig am Gewinde angeordnet ist. Dadurch kann die klemmende Wirkung des eingesetzten Materials am erhabenen Bereich sehr fein eingestellt werden, da sie direkt in dem korrespondierenden Gewinde des Türschließers eingreift und in den Gewindeflanken durch den Materialfluss des erhabenen Bereiches geführt wird. Der Materialfluss des erhabenen Bereiches wird dadurch erzielt, dass sich beim Eindrehen des Regulierventils in die Bohrung des Türschließers und somit in das dortige korrespondierende Gewinde an dem erhabenen Bereich Gewindegänge bilden. Hierdurch wird eine hohe Flächenpressung, insbesondere zwischen den Gewindeflanken des Innengewindes und des Regulierventils erzeugt. Es hat sich gezeigt, dass sich durch eine derartige Anordnung die ineinander greifenden Gewindeteile nicht mehr selbständig verdrehen. Ferner ist ein manuelles und/oder gewolltes Verstellen des Regulierventils selbstverständlich weiterhin möglich. In anderen Worten ausgedrückt kann das Regulierventil jederzeit entsprechend den gewünschten Anforderungen bezogen auf ein definiertes Schließverhalten reguliert werden, wobei die Verdrehsicherung ein selbständiges Verdrehen, insbesondere durch auftretende dynamische Belastungen wirkungsvoll verhindert.

Der Regulierbereich weist ein Ende auf, das dem Grundkörper abgewandt ist und verjüngend, bevorzugt kegelförmig ausgebildet ist. Diese Ausführungsform bietet eine genauere Justierung des Ölflusses, der die Schließgeschwindigkeit des Schließvorgangs ganz wesentlich beeinflusst. Trotz der wirkenden Kräfte, ausgehend vom strömenden Fluid auf das Regulierventil, sorgt der erhabene Bereich dafür, dass sich das Regulierventil am Gewinde nicht ungewollt und selbständig verreguliert.

Es hat sich als vorteilhaft erwiesen, dass der Regulierbereich am Grundkörper durch ein Sprüzgussverfahren befestigt wird. Hierdurch wird auf einfache Arbeitsweise der Regulierbereich hergestellt. Beim Spritzgussverfahren kann je nach Anforderungen in Bezug auf das zu verarbeitende Material variiert werden. Der Grundkörper kann aus einem Metall, zum Beispiel Zink, Messing oder Stahl bestehen, wobei der Regulierbereich vorzugsweise aus einem Kunststoffmaterial besteht. Um insbesondere eine hohe Festigkeit zu erzielen, kann der besagte Kunststoff faserverstärkt sein, insbesondere kann der Kunststoff einen bestimmten Anteil an Glasfasern und/oder Kohlenstofffasern und/oder Aramidfasern aufweisen.

Eine weitere Möglichkeit besteht darin, dass der Grundkörper und/oder der Regulierbereich aus einem Kunststoffmaterial bestehen, insbesondere der Grundkörper aus einem faserverstärkten Kunststoff besteht. Dadurch wird in einem Arbeitsgang das komplette Regulierventil hergestellt.

Als ein weiterer Vorteil hat sich herausgestellt, dass der Grundkörper farblich ausgeführt ist. Hierdurch können unterschiedliche Arten von Regulierventilen visuell unterschieden werden.

Vorteilhaft ist, dass der Türschließer einen Zulaufkanal, einen Ablaufkanal und einen kegelförmigen Ventilsitz aufweist, wobei ein Fluid durch den Zulaufkanal entlang des Ventilsitzes zum Ablaufkanal leitbar ist. Das freie Ende des Regulierbereiches ist im Wesentlichen dem Ventilsitz des Türschließers angepasst. In der Regel besteht ein gewisser Abstand zwischen dem Ventilsitz und dem vorzugsweise kegelförmigen Ende des Regulierbereiches, so dass das Fluid vom Zulaufkanal zwischen dem Ventilsitz und dem vorzugsweise kegelförmigen Ende des Regulierbereiches in Richtung des Ablaufkanals strömen kann.

Ein weiterer Vorteil ist, dass der erhabene Bereich einen Radius aufweist, der beim Eindrehen des Regulierventils in das Innengewinde der Bohrung des Türschließers ein leichtes Andrehmoment für den Monteur bietet. Somit können die entstehenden Gewindegänge am erhabenen Bereich auf einfache und leichte Weise gebildet werden. Weiterhin entstehen keine großen Kerbwirkungen am erhabenen Bereich.

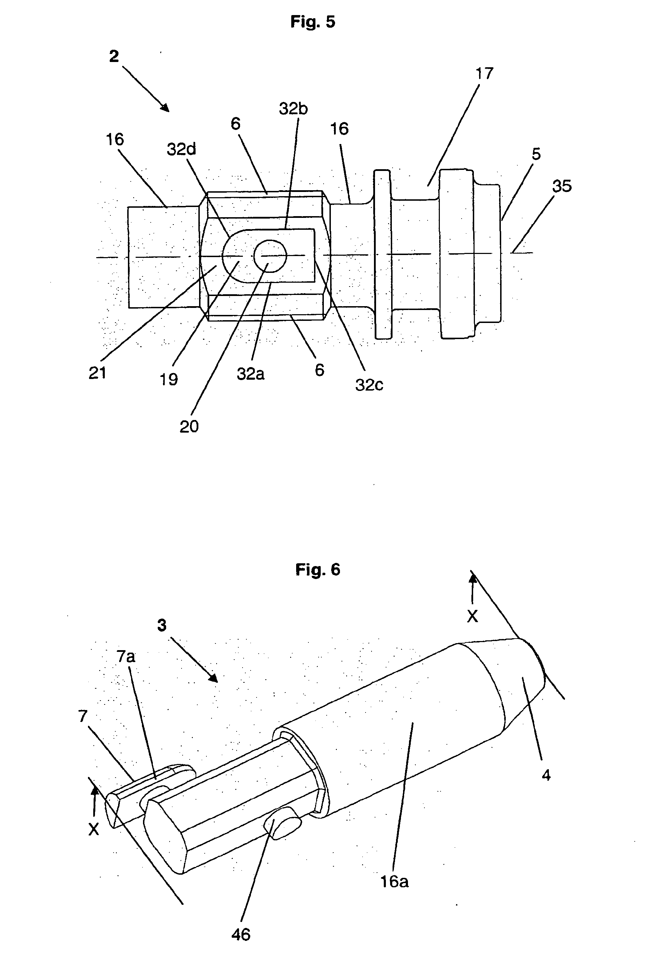

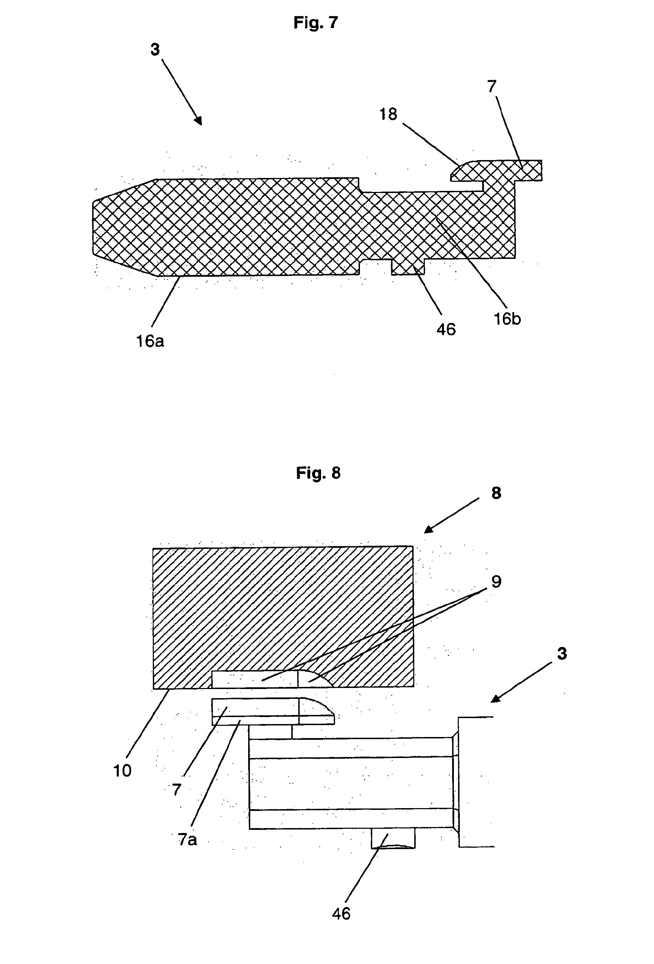

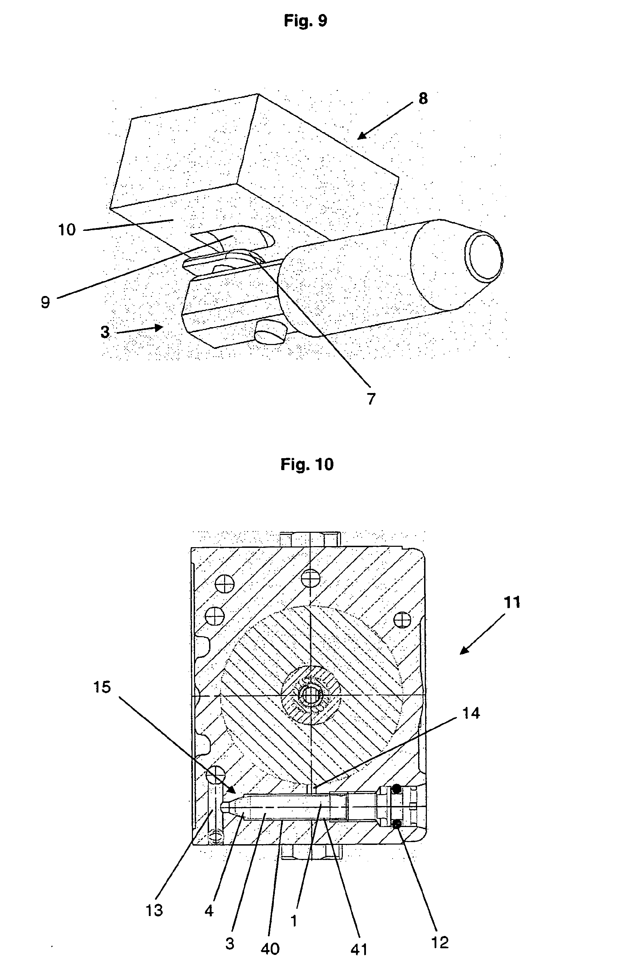

Die Figuren 6 und 7 sowie Teile aus den Figuren 8 und 9 zeigen den Regulierbereich des erfindungsgemäßen Regulierventils, wie dieser sich nach dem Spritzvorgang darstellt und direkt mit dem Grundkörper verbunden ist. Um den Regulierbereich eindeutiger beschreiben zu können, sind diese Darstellungen (Figuren 6 und 7), bei denen der Regulierbereich als Einzelteil dargestellt ist, gewählt worden. Der Regulierbereich des erfindungsgemäßen Regulierventils wird in dieser Form nicht als Einzelteil vorhanden sein, sondern er wird nach dem Spritzvorgang direkt mit dem Grundkörper verbunden sein.

Es zeigen:
- Figur 1:: Ein erfindungsgemäßes Regulierventil in perspektivischer Ansicht,
- Figur 2:: das erfindungsgemäße Regulierventil aus Figur 1 im Vollschnitt entlang der Schnittebene Y-Y,
- Figur 3:: einen Grundkörper des erfindungsgemäßen Regulierventils in perspektivischer Ansicht,
- Figur 4:: den Grundkörper des erfindungsgemäßen Regulierventils aus Figur 3 im Vollschnitt entlang der Schnittebene Z-Z,
- Figur 5:: den Grundkörper des erfindungsgemäßen Regulierventils in einer Draufsicht,
- Figur 6:: den Regulierbereich des erfindungsgemäßen Regulierventils in perspektivischer Ansicht,
- Figur 7:: den Regulierbereich des erfindungsgemäßen Regulierventils im Vollschnitt aus Figur 6 entlang der Schnittebene X-X,
- Figur 8:: einen Ausschnitt eines Schiebers im Vollschnitt,
- Figur 9:: einen Ausschnitt des Schiebers aus Figur 8 in perspektivischer Darstellung,
- Figur 10:: einen Türschließer mit eingedrehtem Regulierventil.

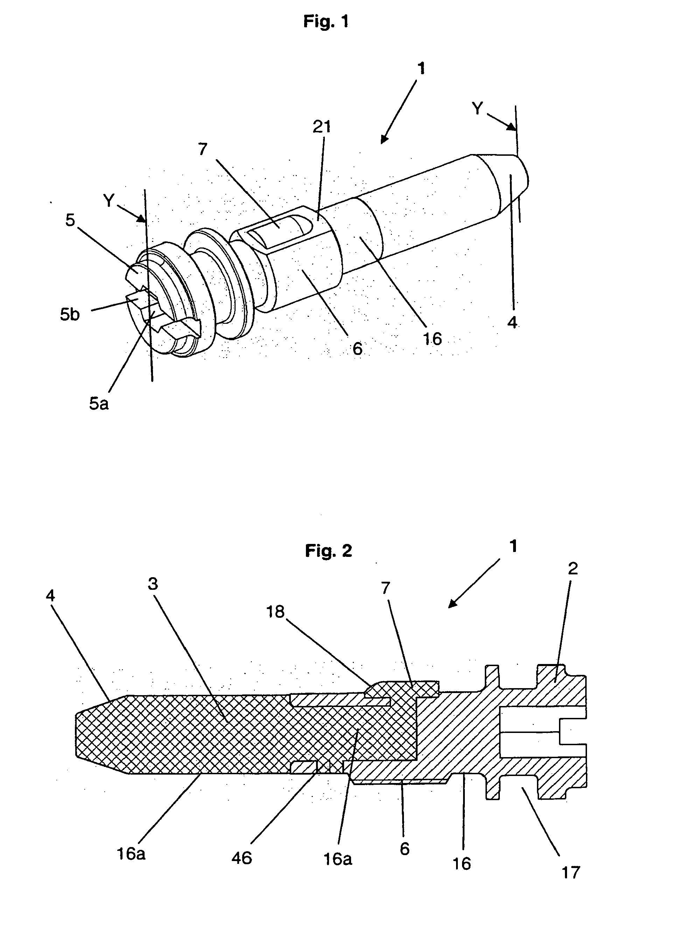

Figur 1 zeigt ein Regulierventil 1, welches für einen hydraulischen Türschließer vorgesehen ist. Hierbei kann es sich um diverse Türschließer handeln, die beispielsweise mit einer Kurvenexzenterscheibe gemäß DE 103 61 085 A1 oder mit einer Zahnstange gemäß DE 199 01 234 C1 betreibbar sind. Das Regulierventil 1 weist einen Kopfbereich 5 auf, an dem ein Sechskant 5a sowie ein Schlitz 5b ausgebildet sind. Der Schaft 16 des Regulierventils 1 besitzt ein Gewinde 6, an dem sich eine Fläche 21 befindet. In Teilbereichen der Fläche 21 ist ein erhabener Bereich 7 vorhanden. Das Regulierventil 1 ist an einem Ende 4 kegelförmig, sich verjüngend ausgeführt. Weiterhin weist Figur 1 eine Schnittebene Y-Y auf.

Figur 2 zeigt einen Vollschnitt des Regulierventils 1 entlang der Schnittebene Y-Y aus der Figur 1 Das Regulierventil 1 besteht aus dem Grundkörper 2 sowie einem Regulierbereich 3. Der Regulierbereich 3 besteht im Wesentlichen aus einer Schaftverlängerung 16a und einem freien Ende 4. Der erhabene Bereich 7 stellt sich mit einem Radius 18 dar, der dafür sorgt, dass beim Eindrehen des Regulierventils 1 in die Bohrung des Türschließers ein leichtgängiger Anschnitt am erhabenen Bereich 7 erfolgt. Der Grundkörper 2 weist eine Aufnahme 17 für ein Dichtelement auf. Dieses Dichtelement kann z. B. ein O-Ring sein. Der Grundkörper 2 weist weiterhin am Schaft 16 ein Gewinde 6 auf. Ein Zapfen 46 ist an der gegenüberliegenden Seite des erhabenen Bereiches 7 angebracht.

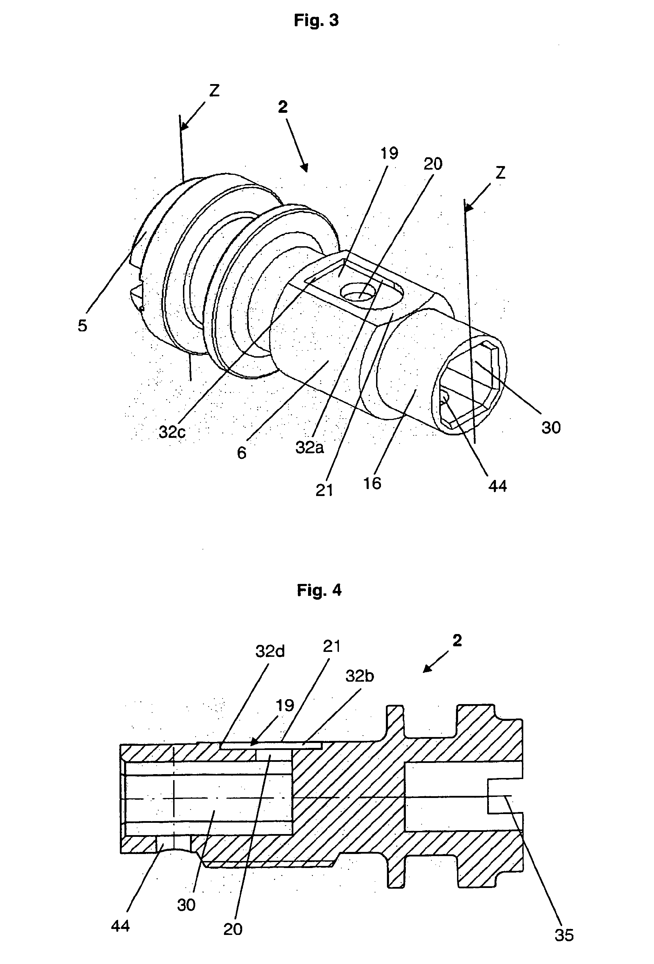

Figur 3 zeigt den Grundkörper 2, der einen Schaft 16 aufweist, an dem ein Gewinde 6 angebracht ist. Dieses Gewinde 6 besitzt eine Fläche 21, die sich entlang des gesamten Gewindes 6 erstreckt. In die Fläche 21 ist eine Nut 19 eingelassen ist, die sich auch entlang der gesamten Gewindelänge erstrecken kann.

Durch die Vertiefung der Nut 19 entstehen die Seitenflächen 32a sowie 32c. An der dem Kopfbereich 5 gegenüberliegenden Seite des Grundkörpers 2 weist der Grundkörpers 2 eine Sacklochbohrung 30 auf, die mit der Schaftverlängerung 16a formschlüssig zusammenwirkt. Die Sacklochbohrung 30 kann z. B. einen rechteckigen, viereckigen oder dreieckigen Querschnitt aufweise. Der Boden der Nut 19 weist eine Materialaustrittsöff nung 20 auf, die durchgängig bis in die formschlüssige Sacklochbohrung 30 ragt. Weiterhin ist auf der gegenüberliegenden Seite der Fläche 21 eine Bohrung 44 für einen zusätzlichen Verdrehschutz am Schaft 16 angebracht, die durchgängig bis in die Sacklochbohrung 30 hinein ragt. Weiterhin weist Figur 3 eine Schnittebene Z-Z auf.

Figur 4 zeigt den Grundkörper 2 im Verschnitt. Hierbei wird gezeigt, dass die Fläche 21 sowie die Nut 19 bevorzugt parallel zur Drehachse 35 angeordnet sind. Durch die Vertiefung der Nut 19 entstehen die Seitenwände 32b sowie 32d. Weiterhin ist die Sacklochbohrung 30 sowie die angrenzenden Materialaustrittsöffnung 20 und die Bohrung 44 für den Verdrehschutz vorhanden.

Figur 5 zeigt den Grundkörper 2, bei dem am Schaft 16 ein Gewinde 6 angebracht ist. Die Nut 19 ist im Teilbereich der Fläche 21 eingebracht, wodurch die Anlageflächen 32a, 32b, 32c sowie 32d entstehen. Weiterhin ist die Materialaustrittsöffnung 20 im Bereich der Nut 19 vorhanden. Die Fläche 21 ist mittig zur Drehachse 35 ausgebildet. Zwischen dem Kopfbereich 5 und dem Gewinde 6 befindet sich die Aufnahme 17 für ein Dichtelement. Durch die Materialaustrittsöffnung 20 gelangt der Kunststoff an Hand des Spritzvorgangs in die Nut 19 und wird kontrolliert erhaben gebildet. Die Seitenflächen 32a sowie 32b der Nut 19 dienen der zusätzlichen Stabilisierung des erhabenen Bereiches 7 gegen Verdrehen, wenn der Monteur das Regulierventil 1 in eine Bohrung des Türschließers 11 eindreht sowie das Schließverhalten des Türschließers 11 entsprechend reguliert (Figur 10).

Figur 6 zeigt den Regulierbereich 3 in perspektivischer Ansicht. Der erhabene Bereich 7 weist einen Kragen 7a auf, der umlaufend am erhabenen Bereich 7 angeordnet ist. Dieser umlaufende Kragen 7a korrespondiert mit den Seitenflächen 32a, 32b, 32c sowie 32d der Nut 19 und stellt somit eine zusätzliche Sicherung gegen Verdrehen dar. Der Zapfen 46 ist auf der gegenüberliegenden Seite des erhabenen Bereiches 7 angebracht. Das Ende 4 des Regulierbereiches 3 ist kegelförmig, sich verjüngend an der Schaftverlängerung 16a angeordnet.

Figur 7 zeigt den Regulierbereich 3 im Vollschnitt, bei dem der Radius 18 sowie der erhabene Bereich 7 vorhanden sind. Der Zapfen 46, der Schaft 16a sowie der Ansatz 16b sind an dem Regulierbereich 3 angebracht.

Figur 8 zeigt die Formgebung des erhabenen Bereiches 7 während der Herstellung. Hierbei wird beim Spritzvorgang ein Schieber 8 eingesetzt, der ein Teil eines Betriebsmittels darstellt. Der Schieber 8 weist eine Negativ-Form 9 auf, welche während des Spritzvorgang mit Material gefüllt wird. Die Negativ-Form 9 ist an der Auflagefläche 10 begrenzt. Somit entsteht die Formgebung des erhabenen Bereiches 7. Einen Teilausschnitt des Regulierbereiches 3 mit dem erhabenen Bereich 7 sowie dem Zapfen 46 ist dargestellt, um zu verdeutlichen, dass während des Spritzvorgangs an Hand des Schiebers 8 und die daran angegebene Negativ-Form 9 der erhabene Bereich 7 gebildet wird. Der Kragen 7a wird durch die Nut 19 des Grundkörpers 2 gebildet. Als Material kann z. B. ein Polyacetal (POM) verwendet werden.

Figur 9 zeigt einen Ausschnitt des Schiebers 8, der die Formgebung des erhabenen Bereiches 7 am Regulierbereich 3 durch die Negativ-Form 9 am Schieber bildet. Die Negativ-Form 9 läuft auf der Auflagefläche 10 aus und ist dort begrenzt. Der Schieber 8 ist ein Teil des Betriebsmittels, mit dem der Spritzvorgang durchgeführt wird. Der Schieber 8 legt sich mit seiner Auflagefläche 10 auf die Fläche 21 des Grundkörpers 2 (Figur 3) und dichtet somit während des Spritzvorgangs ab, so dass kein Kunststoffmaterial unkontrolliert aus der Form fließen kann.

Figur 10 zeigt einen Türschließer 11, in dem ein Regulierventil 1 eingedreht ist. An dem Regulierventil ist ein Dichtelement 12 vorhanden. Das Ende 4 des Regulierbereiches 3 und somit des Regulierventils 1 befindet sich in einem kegelförmigen Ventilsitz 15 des Türschließers 11. Im Bereich des kegelförmigen Endes 4 des Regulierbereiches 3 befindet sich ein Zulaufkanal 13, durch den ein Öl geführt wird. In der Regel liegt das kegelförmige Ende 4 des Regulierbereiches 3 nicht unmittelbar am Ventilsitz 15 auf, so dass das Öl durch den zwischen dem Ventilsitz 15 und dem freien kegelförmigen Ende 4 des Regulierbereiches 3 sich bildenden schmalen Kanal in Richtung eines Ablaufkanals 14 strömen kann. Am Regulierventil 1 kann der Strömungsquerschnitt für das Öl eingestellt werden, wodurch insbesondere das Schließverhalten des Türschließers 11 beeinflussbar ist. Die durch das strömende Öl auf das Regulierventil 1 wirkenden Kräfte können aufgrund der beschriebenen Verdrehsicherung auch im Toleranzbereich keine ungewollte Verdrehung des Regulierventils 1 auslösen,

Das oben beschriebene Regulierventil 1 wird in folgenderweise hergestellt. Der Grundkörper 2 wird im Vorfeld in der Form gemäß Figur 3 hergestellt, dass dieser an seinem Schaft 16, vorzugsweise am Gewinde, eine Fläche 21 besitzt, in der eine Nut 19 eingearbeitet ist, welche vorzugsweise eine Materialaustrittsöffnung 20 besitzt. Der Grundkörper 2 wird in Betriebsmitteln, vorzugweise ein Spritzwerkzeug, eingelegt. Auf die Darstellung der Betriebsmittel wird aus Gründen der Übersichtlichkeit verzichtet. Das Betriebsmittel besitzt u. a. mindestens einen Schieber 8, der die Formgebung des erhabenen Bereiches 7 darstellt. Der Schieber 8 legt sich mit seiner Fläche 10 auf die Fläche 21 des eingelegten Grundkörper 2 und dichtet somit die Fläche 21 nach außen hin ab. Im Inneren entsteht ein Freiraum, der durch die Nut 19, die Negativ-Form 9, der Materialaustrittsöffnung 20, der Bohrung für Verdrehschutz 44 sowie der formschlüssigen Sacklochbohrung 30 entsteht. Während das Betriebsmittel in die verarbeitende Position gebracht wird, entsteht ein weiterer Bereich des Freiraumes, der den Schaft 16 des Regulierbereiches 3 sowie das freie Ende 4 des Regulierbereiches 3 bildet. Somit entspricht der komplette Freiraum des Betriebsmittels in Verbindung mit dem Grundkörper 2 der in den Figuren 6 und 7 dargestellten Form.

Beim Spritzvorgang wird ein Kunststoffmaterial, welches im vorliegenden Ausführungsbeispiel ein Polyacetal (POM) ist, das sich unter anderem durch seine gute Gleiteigenschaft, gute Chemikalienfestigkeit und eine hohe Abriebfestigkeit auszeichnet, in den oben beschriebenen Freiraum eingespritzt. Dadurch wird die Form, welche in den Figuren 6 und 7 dargestellt ist, gebildet. Diese Form, wie sie in den Figuren 6 und 7 dargestellt ist, ist kraft- und/oder formschlüssig mit dem Grundkörper 2 verbunden. Nach dem Spritzvorgang wird das Betriebsmittel geöffnet, der Schieber 8 wird von der Fläche 21 des Grundkörpers 2 entfernt, so dass das Regulierventil 1 gemäß Figur 1 in dem vorhandenen Betriebsmittel zur Entnahme aus demselben vorliegt.

Beim Einschrauben des Regulierventils 1 in die Bohrung 40 des Torschließers 11 dient der Radius 18 am erhabenen Bereich 7 zum leichten an- und eindrehen in das Innengewinde des Türschließers 11. Weiterhin wird eine zusätzliche klemmende Wirkung durch die erfindungsgemäße Verdrehsicherung erzielt, da der axiale Spielraum zwischen dem Gewinde 6 des Regulierventils 1 und dem Innengewinde 41 des Türschließers 11 durch den erhabenen Bereich 7 ausgefüllt wird. Hierdurch wird eine hohe Flächenpressung, insbesondere an den verdrehsicherungsfreien Gewindeflanken der ineinander greifenden Gewindeteile erreicht. Gleichzeitig kann das Regulierventil 1 manuell jederzeit verdreht und/oder aus der Bohrung ausgeschraubt werden.

### Bezugszeichenliste

- 1: Regulierventil
- 2: Grundkörper
- 3: Regulierbereich
- 4: Ende
- 5: Kopfbereich
- 5a: Sechskant
- 5b: Schlitz
- 6: Gewinde
- 7: erhabener Bereich
- 7a: Kragen
- 8: Schieber (Teil des Betriebsmittel)
- 9: Negativ-Form
- 10: Auflagefläche
- 11: Türschließer
- 12: Dichtelement
- 13: Zulaufkanal
- 14: Ablaufkanal
- 15: Ventilsitz
- 16: Schaft
- 16a: Schaftverlängerung
- 16b: Ansatz
- 17: Aufnahme
- 18: Radius
- 19: Nut
- 20: Materialaustrittsöffnung
- 21: Fläche
- 30: Sacklochbohrung
- 32 a: Seitenfläche der Nut
- 32 b: Seitenfläche der Nut
- 32 c: Seitenfläche der Nut
- 32 d: Seitenfläche der Nut
- 35: Drehachse
- 40: Bohrung
- 41: Innengewinde
- 44: Bohrung
- 46: Zapfen

- X-X: Schnittebene
- Y-Y: Schnittebene
- Z-Z: Schnittebene

## Patentansprüche

1. Regulierventil (1) mit einem Grundkörper (2), an den sich ein Regulierbereich (3) anschließt, und einem Gewinde (6) mit einer Verdrehsicherung, wobei die Verdrehsicherung einen erhabenen Bereich (7) aufweist, wobei das Regulierventil (1) in eine mit einem Innengewinde (41) ausgeführte Bohrung (40) eines hydraulischen Türschließers (11) befestigbar ist, **dadurch gekennzeichnet, dass** der Grundkörper (2) eine Sacklochbohrung (30) aufweist, die entlang der Längsachse des Grundkörpers (2) gegenüberliegend dem Kopfbereich (5) angeordnet ist, wobei der Ansatz (16b) formschlüssig und verdrehfest in der Sacklochbohrung (30) befestigt ist und der erhabene Bereich (7) einen umlaufenden Kragen (7a) aufweist, der mit Seitenflächen (32a - 32d) der Nut (19) korrespondiert.

2. Regulierventil (1) nach Anspruch 1, **dadurch gekennzeichnet, dass** der Grundkörper (2) eine Nut (19) aufweist, an der der erhabene Bereich (7) angeordnet ist.

3. Regulierventil (1) nach Anspruch 2, **dadurch gekennzeichnet, dass** die Nut (19) im Bereich einer Fläche (21) angeordnet ist.

4. Regulierventil (1) nach Anspruch 1, **dadurch gekennzeichnet, dass** der Grundkörper (2) einen Schaft (16) aufweist, an dem der erhabene Bereich (7) angeordnet ist und über den Durchmesser des Schaftes (16) hinausragt.

5. Regulierventil (1) nach Anspruch 1, **dadurch gekennzeichnet, dass** der erhabene Bereich (7) am Gewinde (6) angeordnet ist und über den Durchmesser des Gewindes (6) hinausragt.

6. Regulierventil (1) nach Anspruch 4, **dadurch gekennzeichnet, dass** das Gewinde (6) am Schaft (16) angeordnet ist.

7. Regulierventil (1) nach Anspruch 1, **dadurch gekennzeichnet, dass** der Regulierbereich (3) aus einer Schaftverlängerung (16a) mit einem Ende (4) besteht, wobei die Schaftverlängerung (16a) über einen Ansatz (16b) mit dem erhabenen Bereich (7) verbunden ist.

8. Regulierventil (1) nach Anspruch 1, **dadurch gekennzeichnet, dass** die Sacklochbohrung (30) einen eckigen oder unrunden Querschnitt aufweist.

9. Regulierventil (1) nach Anspruch 1, **dadurch gekennzeichnet, dass** der Ansatz (16b) einen Zapfen (46) aufweist, der in eine Bohrung (44) des Grundkörpers (2) hineinragt.

10. Regulierventil (1) nach Anspruch 5, **dadurch gekennzeichnet, dass** der erhabene Bereich (7) form- und/oder kraft- und/oder stoffschlüssig am Gewinde (6) angeordnet ist.

11. Regulierventil (1) nach Anspruch 7, **dadurch gekennzeichnet, dass** der Regulierbereich (3) ein Ende (4) aufweist, das dem Grundkörper (2) abgewandt ist und verjüngend, bevorzugt kegelförmig ausgebildet ist.

12. Regulierventil (1) nach einem der vorhergehenden Ansprüche, **dadurch gekennzeichnet, dass** der Regulierbereich (3) am Grundkörper (2) durch ein Spritzgussverfahren befestigt wird.

13. Regulierventil (1) nach einem der vorhergehenden Ansprüche, **dadurch gekennzeichnet, dass** der Grundkörper (2) und/oder der Regulierbereich (3) aus einem Kunststoffmaterial bestehen, insbesondere der Grundkörper (2) aus einem faserverstärkten Kunststoff besteht.

14. Regulierventil (1) nach einem der vorhergehenden Ansprüche, **dadurch gekennzeichnet, dass** der Grundkörper (2) farblich ausgeführt ist.

15. Regulierventil (1) nach einem der vorhergehenden Ansprüche, **dadurch gekennzeichnet, dass** der Türschließer (11) einen Zulaufkanal (13), einen Ablaufkanal (14) und einen kegelförmigen Ventilsitz (15) aufweist, wobei ein Fluid durch den Zulaufkanal (13) entlang des Ventilsitzes (15) zum Ablaufkanal (14) leitbar ist.

16. Regulierventil (1) nach Anspruch 1, **dadurch gekennzeichnet, dass** der erhabene Bereich (7) einen Radius (18) aufweist, der beim Eindrehen des Regulierventlis (1) in das Innengewinde (41) der Bohrung (40) des Türschließers (11) ein leichtes Andrehmoment für den Monteur bietet.

## Claims

1. A regulating valve (1) including a body (2), which is adjoined by a regulating area (3), and a thread (6) provided with an anti-rotation means, wherein the anti-rotation means feature a raised area (7), wherein the regulating valve (1) is attachable in a bore (40) of a hydraulic door closer (11), which bore is executed with a female thread (41), **characterized in that** the body (2) features a blind end bore (30) which is disposed along the longitudinal axis of the body (2) and located opposite the head area (5), wherein the extension (16b) is positively and torsion-resistantly attached in the blind end bore (30) and the raised area (7) has a circumferential collar (7a), which corresponds to lateral surfaces (32a to 32d) of the groove (19).

2. The regulating valve (1) according to claim 1, **characterized in that** the body (2) features a groove (19) at which the raised area (7) is disposed.

3. The regulating valve (1) according to claim 2, **characterized in that** the groove (19) is disposed in the area of a surface (21).

4. The regulating valve (1) according to claim 1, **characterized in that** the body (2) features a shank (16), at which the raised area (7) is disposed and projects beyond the diameter of the shank (16).

5. The regulating valve (1) according to claim 1, **characterized in that** the raised area (7) is disposed at the thread (6) and projects beyond the diameter of the thread (6).

6. The regulating valve (1) according to claim 4, **characterized in that** the thread (6) is disposed at the shank (16).

7. The regulating valve (1) according to claim 1, **characterized in that** the regulating area (3) consists of a shank prolongation (16a) with an end (4), the shank prolongation (16a) being connected to the raised area (7) via an extension (16b).

8. The regulating valve (1) according to claim 1, **characterized in that** the blind end bore (30) presents an angular or a non-circular cross-section.

9. The regulating valve (1) according to claim 1, **characterized in that** the extension (16b) features a neck (46) which protrudes into a bore (44) of the body (2).

10. The regulating valve (1) according to claim 5, **characterized in that** the raised area (7) is disposed positively and/or non-positively and/or positively by material at the thread (6).

11. The regulating valve (1) according to claim 7, **characterized in that** the regulating area (3) has an end (4) which is facing away from the body (2) and is configured to be tapered, preferably cone-shaped.

12. The regulating valve (1) according to any of the preceding claims, **characterized in that** the regulating area (3) is attached to the body (2) by means of an injection-moulding process.

13. The regulating valve (1) according to any of the preceding claims, **characterized in that** the body (2) and/or the regulating area (3) consist of a plastic material, **in that** in particular the body (2) consists of a fibre-reinforced plastic material.

14. The regulating valve (1) according to any of the preceding claims, **characterized in that** the execution of the body (2) is coloured.

15. The regulating valve (1) according to any of the preceding claims, **characterized in that** the door closer (11) presents a supply channel (13), a drainage channel (14) and a cone-shaped valve seat (15), wherein a fluid can be guided through the supply channel (13) along the valve seat (15) to the drainage channel (14).

16. The regulating valve (1) according to claim 1, **characterized in that** the raised area (7) presents a radius (18) which, when the regulating valve (1) is screwed into the female thread (41) of the bore (40) of the door closer (11), offers an easy initial screwing torque for the mechanic installer.

## Revendications

1. Vanne de réglage (1) avec un corps de base (2), auquel se joint une partie de réglage (3), et avec un filetage (6) avec une protection anti-rotation, la protection anti-rotation présentant une région surélevée (7), la vanne de réglage (1) pouvant être fixée dans une forure (40), aménagée avec un taraudage (41), d'un ferme-porte hydraulique (3), **caractérisée en ce que** le corps de base (2) présente un trou borgne (30), qui est agencé le long de l'axe longitudinal du corps de base (2) à l'opposée de la partie de la tête (5), l'extension (16b) étant fixée dans le trou borgne (30) par la forme et de façon à résister à la rotation, et la région surélevée (7) présentant une collerette circonférentielle (7a) qui correspond aux surfaces latérales (32a à 32d) de la rainure (19).

2. Vanne de réglage (1) selon la revendication 1, **caractérisée en ce que** le corps de base (2) présente une rainure (19) sur laquelle est agencée la région surélevée (7).

3. Vanne de réglage (1) selon la revendication 2, **caractérisée en ce que** la rainure (19) est agencée dans la région d'une surface (21).

4. Vanne de réglage (1) selon la revendication 1, **caractérisée en ce que** le corps de base (2) présente une manche (16) sur laquelle la région surélevée (7) est agencée et dépasse le diamètre de la manche (16).

5. Vanne de réglage (1) selon la revendication 1, **caractérisée en ce que** la région surélevée (7) est agencée sur le filetage (6) et dépasse le diamètre du filetage (6).

6. Vanne de réglage (1) selon la revendication 4, **caractérisée en ce que** le filetage (6) est agencé sur la manche (16).

7. Vanne de réglage (1) selon la revendication 1, **caractérisée en ce que** la région de réglage (3) est composée d'une prolongation de manche (16a) avec une extrémité (4), la prolongation de manche (16a) étant reliée à la région surélevée (7) par l'intermédiaire d'une extension (16b).

8. Vanne de réglage (1) selon la revendication 1, **caractérisée en ce que** le trou borgne (30) présente une coupe transversale angulaire ou en faux-rond.

9. Vanne de réglage (1) selon la revendication 1, **caractérisée en ce que** l'extension (16b) présente un ergot (46) qui avance dans une forure (44) du corps de base (2).

10. Vanne de réglage (1) selon la revendication 5, **caractérisée en ce que** la région surélevée (7) est agencée sur le taraudage (6) par la forme et/ou par la force et/ou par la matière.

11. Vanne de réglage (1) selon la revendication 7, **caractérisée en ce que** la partie de réglage (3) présente une extrémité (4) qui est détournée du corps de base (2) et est aménagée à section décroissante, de préférence de forme conique.

12. Vanne de réglage (1) selon l'une des revendications précédentes, **caractérisée en ce que** la partie de réglage (3) est fixée au corps de base (2) par un procédé de moulage par injection.

13. Vanne de réglage (1) selon l'une des revendications précédentes, **caractérisée en ce que** le corps de base (2) et/ou la partie de réglage (3) sont composés d'une matière plastique, en particulier **en ce que** le corps de base (2) est composé de matière plastique renforcée par des fibres.

14. Vanne de réglage (1) selon l'une des revendications précédentes, **caractérisée en ce que** le corps de base (2) est aménagé en couleur.

15. Vanne de réglage (1) selon l'une des revendications précédentes, **caractérisée en ce que** le ferme-porte (11) présente une conduite d'alimentation (13), une conduite d'évacuation (14) et un siège de vanne (15) en forme de cône, un fluide pouvant être amené à traverser la conduite d'alimentation (13) en passant par le siège de vanne (15) vers la conduite d'évacuation (14).

16. Vanne de réglage (1) selon la revendication 1, **caractérisée en ce que** la région surélevée (7) présente un rayon (18) qui offre un couple de rotation léger à l'installateur lorsqu'il visse la vanne de réglage (1) dans le taraudage (41) de la forure (40) du ferme-porte (11).
